Europäisches Patentamt

European Patent Office

Office européen des brevets

(11) Publication number: **0 447 855 A2**

# EUROPEAN PATENT APPLICATION

(21) Application number: 91103028.6

(22) Date of filing: 28.02.91

(51) Int. Cl.⁵: **C09J 7/02, C09J 153/00, C08J 3/24**

(30) Priority: 19.03.90 US 495190

(43) Date of publication of application:
25.09.91 Bulletin 91/39

(84) Designated Contracting States:
**DE FR GB IT NL SE**

(71) Applicant: **National Starch and Chemical Investment Holding Corporation**
**501 Silverside Road**
**Wilmington, Delaware 19809(US)**

(72) Inventor: **Lydzinski, Susan**
**240 Washington Place**
**Telford, Pennsylvania 18969(US)**
Inventor: **Davis, Irwin J.**
**678 Meadow Road**
**Bridgewater, New Jersey 08807(US)**
Inventor: **Foreman, Paul B.**
**179 Middaugh Street**
**Somerville, New Jersey 08876(US)**

(74) Representative: **Hagemann, Heinrich, Dr. et al**
**Patentanwälte Hagemann & Kehl Postfach**
**860329**
**W-8000 München 86(DE)**

(54) Plasticizer resistant pressure sensitive adhesive.

(57) Improved pressure sensitive adhesive compositions based on SIS (styrene-isoprene-styrene) block polymers are described which are particularly adapted for use on vinyl substrates by radiation initiated crosslinking. The crosslinked adhesives provide practical advantages in bonding plasticized PVC articles and films.

EP 0 447 855 A2

This invention is directed to improved pressure sensitive adhesives based on SIS block copolymers. In a further aspect, the invention relates to pressure sensitive adhesive compositions based on SIS (styrene-isoprene-styrene) block polymers which are particularly adapted for use on vinyl substrates by radiation initiated crosslinking.

Pressure sensitive adhesives function to provide instantaneous adhesion when applied under light pressure. They are characterized by having a built-in capacity to secure this adhesion to a surface without activation, such as by treatment with solvents or heat, and also by having sufficient internal. strength so that the adhesive material will not rupture before the bond between the adhesive material and the surface ruptures. The capacity to obtain instantaneous adhesion is usually expressed as the amount of "tack" or "tackiness". Ordinarily it is desirable to obtain as much tack as possible without losing a significant amount of internal strength (cohesion). The latter balance of adhesive and cohesive properties has been difficult to obtain in adhesive polymers since monomers conventionally incorporated into the polymers to increase the cohesive strength generally result in a decrease in adhesive tack.

Polyvinyl chloride (PVC or 'vinyl') articles and films are conventionally plasticized with monomeric or polymeric plasticizers. Many pressure sensitive adhesives when placed in contact with plasticized PVC are adversely affected by the migration of the plasticizer from the polymer into the adhesive bond. The plasticizer softens the adhesive and tends to greatly diminish its cohesive strength resulting in a gummy mass which, in extreme cases, is incapable of functioning as an adhesive bond. The most obvious indication of plasticizer migration related adhesive deterioration is the degradation of adhesive properties as a function of aging on vinyl. Many adhesive systems display a dramatic drop off in peel adhesion and creep resistance during contact with plasticized vinyl; however, through proper polymer design and radiation cure, control over the migration process and the subsequent effect on the pressure sensitive adhesive properties can be achieved.

One attempt to overcome this problem of plasticizer migration with respect to rubber based hot melt adhesives has been directed to the addition of a polymeric fatty acid polyamide to the adhesive formulation, see U.S. Pat. No. 4,419,494 to Puletti, et al. Both heat and plasticizer resistance are stated to be improved. In EPO Application No. 103407 (Minnesota Mining Mfg. Co.) a bonding method is described where a decorative article for bonding to plasticized vinyl substrate comprises a pressure sensitive acrylic adhesive layer and an intermediate layer resisting plasticizer migration. The preferred intermediate barrier layer is described as an aliphatic polyurethane resin. U.S. Pat. No. 4,284,681 to Tidmarsh, et al., describes a composite material comprising a layer of highly-plasticized polyvinyl chloride, a fibrous backing, and an intermediate layer of a polymeric material between the polyvinyl chloride layer and the backing.

U.S. Pat. No. 4,234,662 to Pastor, et al., discloses hot melt pressure sensitive adhesives prepared by copolymerizing acrylic based comonomer(s) with allyl acrylate or methacrylate to produce a prepolymer which is applied in fluid form to a substrate and thereafter subjected to electron beam curing.

There is a need for a plasticizer resistant pressure sensitive adhesive capable of forming a durable bond between substrates where at least one of the substrates is polyvinyl chloride containing migratory plasticizer(s).

We have now found that pressure sensitive adhesives based on elastomeric block copolymers exhibit improved performance properties particularly with respect to plasticizer resistance when crosslinked by radiation. The crosslinked adhesives provide practical advantages in bonding plasticized PVC articles and films. After being crosslinked, the adhesive effectively acts as a plasticizer absorber or barrier making the adhesive functional when in contact for an extended length of time with a PVC having a high content of monomeric plasticizer, which without the electron beam or ultraviolet initiated cure (crosslinking) would be useless.

For purposes of this invention and the claims made herein, the radiation suitably employed to cure the adhesives herein should be interpreted to include radiation provided by electron beam as well as ultraviolet light (approximately 160 to 590 nm).

The irradiated adhesive is useful for bonding to plasticized PVC surfaces; represented, for example, by a PVC platen substrate on which an adhesive backed material such as a sanding disk is bonded and useful on pressure sensitive labels for vinyl notebook covers or vinyl luggage. Further end-uses are on vinyl labels, decals, tapes and self-adhering, plasticized PVC floor tiles. The adhesive may be applied using conventional techniques. Typical methods involve application of the adhesive onto tape, floor tile or other face stock, or the adhesive may be coated on release paper and thereafter radiation-cured (crosslinked). The coated release paper may then be laminated to, for example, paper, plastic film (including PVC), fabric, foil or composite for subsequent use on plasticized PVC film or foamed material. Typical example of composites include fiber reinforced tape, co-extruded film and adhesive laminations of flexible substrates.

Hot melt adhesives are 100% solid materials which do not contain or require any solvents. They are solid materials at room temperature but, on application of heat, melt to a liquid or fluid state in which form they are applied to a substrate. On cooling, the adhesive regains its solid form and gains its cohesive strength. In this regard, hot melt adhesives differ from other types of adhesives which achieve the solid state through evaporation or removal of solvents or by polymerization. Hot melt adhesives may be formulated to be pressure sensitive, i.e., aggressively tacky at room temperature so that a bond may be formed on mere contact between the two surfaces.

Suitable pressure sensitive hot melt adhesives for crosslinking by irradiation in accordance with the invention comprise

20-50% SIS (styrene-isoprene-styrene) block copolymer

40-60% aliphatic hydrocarbon tackifier

0-25% hydrogenated rosin or rosin ester

5-25% plasticizing oil (mineral oil)

0.2-2.0% antioxidant

in amounts taken to total 100%.

Block copolymer - The rubbery block copolymers useful herein are categorized as A-B-A block polymers, where the A block comprises styrene or homologues thereof, e.g., alpha-methyl styrene, and the B block is isoprene. They are most commonly linear in nature although some radial block copolymers are available. The copolymers generally have a styrene or styrene homologue content within the range of about 10 to 35% by weight with the remainder of the copolymer comprising the isoprene component. These copolymers may be prepared using methods taught, for example, in U.S. Pat. Nos. 3,239,478; 3,427,269; 3,700,633; 3,753,936; and 3,932,327. Alternatively, they may be obtained from Shell Chemical Co. under the trademarks Kraton D1107, D1117, D1112, D1111; from Eni Chem Elastomeri (Italy), as Europrene Sol T190 and Europrene Sol T-192; from Fina Ltd. (Netherlands), as Finaprene 414; and from Dow as XU 16500 (an alpha methyl styrene-isoprene-alpha methyl styrene block). Commercially available copolymers in this class have styrene content of approximately 14 to 25% by weight. Preferred for use herein is a radial SIS polymer designated Kraton D1320X newly developed by Shell, which contains 10% styrene and 90% isoprene that can crosslink (cure) with substantially less radiation than the polymers mentioned above.

Aliphatic hydrocarbon tackifier - The tackifying resins useful in the adhesives of the present invention are those essentially aliphatic hydrocarbon resins which are unhydrogenated or hydrogenated and commonly used in hot melt adhesive formulations.

Suitable commercially available aliphatic resins for use herein include Regalrez 1078 and Regalrez 1125 available from Hercules; Escorez 1310, Escorez 1312 and Escorez 5300 from Exxon; and $C_5$ synthetic terpene resins such as Wingtack 95 from Goodyear. Preferred for use herein are Regalrez 1125, Regalrez 1078, Escorez 5300, Arkon P-100 and Arkon P-125 (Arakawa Chemical, USA). These preferred resins are from 80-100% hydrogenated, containing little or no unsaturation. We have found that more efficient cures, i.e., requiring less radiation, are obtained with hydrogenated hydrocarbon resins, although the unhydrogenated materials can also function with additional radiation as compared to the hydrogenated resins.

It may be desirable or necessary at times to increase bond adhesion to polyolefin or metallic surfaces. Small amounts, up to about 25% by weight, of polar tackifying resins have been found beneficial, and in this respect can be included in the adhesive formulation. Hydrogenated rosin and rosin esters are illustrative of such polar resins. Suitable commercially available resins of this type include KE-311 and KR-610 sold by Arakawa Chemical, USA, used preferably in amounts of 5 to 15% by weight. Also suitable are Foral 85 and Foral AX sold by Hercules, Inc.

Plasticizing oil - The plasticizing oils are used in the adhesive in amounts of 5% to about 25%, preferably 10 to 20%, by weight. The above broadly includes not only the usual plasticizing oils such as the petroleum derived hydrocarbon oils (primarily mineral oil), but also contemplates the use of the olefin oligomers and low molecular weight polymers. The petroleum derived oils which may be employed are relatively high boiling materials containing only a minor portion of aromatic hydrocarbons (preferably less than 30% and, more particularly, less than 15% by weight of the oil). Alternatively, the oil may be totally non-aromatic. The oligomers may be polypropylenes, polybutenes, hydrogenated polyisoprene, hydrogenated polybutadiene, or the like having average molecular weights between about 350 and about 10,000. Vegetable and animal oils as well as their derivatives, for example, glycerol esters of usual fatty acids, may also be used herein. A water-white aliphatic mineral oil, KaydolTM, supplied by Witco Chemical, is preferred.

The hot melt adhesive compositions will also contain a minor amount from 0.2 to 2%, by weight, preferably about 1.5%, of an antioxidant. Among the applicable stabilizers or antioxidants utilized herein are included high molecular weight hindered phenols and multifunctional phenols such as sulfur and phosphorous-containing phenols. Hindered phenols are well known to those skilled in the art and may be characterized as phenolic compounds which also contain sterically bulky radicals in close proximity to the

EP 0 447 855 A2

phenolic hydroxyl group hereof. In particular, tertiary butyl groups generally are substituted onto the benzene ring in at least one of the other positions relative to the phenolic hydroxy group. The presence of these sterically bulky substituted radicals in the vicinity of the hydroxyl group serves to retard its stretching frequency and, correspondingly, its reactivity; this steric hindrance thus providing the phenolic compound with its stabilizing properties. Representative hindered phenols include: 1,3,5-trimethyl 2,4,6-tris(3,5-di-tert-butyl-4-hydroxybenzyl)benzene; pentaerythrityl tetrakis-3(3,5-di-tert-butyl-4-hydroxyphenyl)proprionate; n-octadecyl-3-(3,5-di-tert butyl-4-hydroxyphenyl)-propionate; 4,4'-methylenebis(2,6-tert-butylphenol; 4,4'-thiobis(6-tert-butyl-o-cresol); 2,6-di-tertbutylphenol; 6-(4-hydroxyphenoxy)2,4-bis(n-octylthio)-1,3,5-triazine; di-n-octadecyl 3,5-di-tert-butyl-4-hydroxy-benzylphosphonate; 2-(n-octylthio)ethyl 3,5-di-tert-butyl-4-hydroxy-benzoate; sorbitol hexa[3-(3,5-di-tert-butyl-4-hydroxyphenyl)-propionate]; zinc di-ethyl dithiocarbamate and zinc dibutyl dithiocarbamate.

The performance of these antioxidants may be further enhanced by utilizing, in conjunction therewith known synergists such, for example, as thiodipropionate esters and phosphites. A hindered phenol type antioxidant combined with a phosphite synergist such as a combination of Irganox 1010 and Irgafos 168 [tris(2,4-ditertbutylphenyl)phosphite] from Ciba-Geigy is preferred.

Other additives such as plasticizers, pigments, dye-stuffs conventionally added to hot melt adhesives for various end-uses contemplated may also be included in minor amounts into the formulations of the present invention.

The adhesive compositions are prepared by blending the components in the melt at a temperature of about 130°-200° C. until a homogeneous blend is obtained, approximately 2 hours. Various methods of blending are known to the art and any method that produces a homogeneous blend is satisfactory. An exemplary procedure involves placing the block copolymer, antioxidants and a portion of the oil preferably under an inert gas environment in a jacketed mixing kettle, preferably in a jacketed heavy duty mixer of the Baker-Perkins or Day type, which is equipped with rotors and thereupon raising the temperature to a range of from about 120° to 180° C. When the mixture has been masticated to a uniform consistency, the tackifying resin and the remainder of the oil are slowly added over a period in order to avoid the formation of lumps. Mixing and heating are continued until a smooth, homogeneous mass is obtained whereupon the remainder of the tackifying resin and the oil are thoroughly and uniformly admixed therewith. The resultant hot melt adhesives are generally produced in bulk form and packaged in release coated containers for subsequent use or they may be coated directly onto the tape or label stock or other end-use surface.

In one illustration of a representative process employing the adhesives herein, the hot melt adhesive is applied to a release-coated paper surface in thin film form in a molten state at a temperature ordinarily above about 130° C. The adhesives may be applied using conventional techniques as by use of a roller, extrusion, or the like. The adhesive is irradiated (usually in an inert atmosphere, for example, nitrogen) with an electron beam apparatus to a dosage within a range of about 2.0 to 12 megarads (Mrads). Suitable production-type electron beam emitters are available commercially, for example, Electrocurtain® electron beam processor sold by Energy Sciences Inc., Wilmington, MA. The adhesive coated release paper is then pressure nipped in traditional manner to the surface of the end-use article, for example, pressure-sensitive decal or label stock or sandpaper.

The adhesive coatings may also be cured (crosslinked) by exposure to ultraviolet radiation for a period of time sufficient to effect the desired amount of crosslinking. Ordinarily, when use of ultraviolet light is contemplated, the adhesive will be formulated with from about 0.2 to 5% of an ultraviolet sensitizing component (photoinitiator) based on the weight of the adhesive. Any of the known ultraviolet sensitizing compounds may be used. A photoinitiator such as Irgacure® 651 or Irgacure® 907 from Ciba-Geigy, is preferred. The use of Irgacure® 907 is covered by U.S. Pat. No. 4,582,862. As is known, the length of exposure will be dependent on the intensity of the radiation, the amount and particular ultraviolet sensitizing compound employed, thickness of the adhesive film, etc.

While the invention herein has been described with a focus on hot melt pressure sensitive adhesives, the practitioner will recognize that the adhesives may be prepared (dissolved) with appropriate solvent(s) wherein the adhesive coating is applied not from a molten state but rather from a solvent solution. The solvent is thereafter removed.

If solvent-based adhesives are to be produced, any appropriate solvent for the adhesive components may be employed. In general the solvents are selected from the group consisting of toluene, n-heptane, hexane, xylene and blends thereof, as well as chlorinated solvents, such as methylene chloride. Small amounts, e.g., less than about 10%, of other organic solvents may also be used to help drying and prevent skinning. The latter include methyl isobutyl ketone, isopropanol, ethanol, butyl acetate, ethyl acetate, methyl ethyl ketone and the like. If solvent is employed, the mixing of the components in the heated mixer can be eliminated and all the ingredients are added directly into the solvent.

4

This invention can be further illustrated by the following examples or preferred embodiments thereof, although it will be understood that these examples are included merely for purposes of illustration and are not intended to limit the scope of the invention unless otherwise specifically indicated.

Example 1

The following two formulations designated A and B were prepared in a laboratory sigma mixer employing a temperature of 350°F. Both Formulations A and B are adhesives illustrative of the invention suitable for curing by electron beam radiation. However, superior plasticizer resistance after curing is shown with Formulation A which employs the preferred SIS block copolymer, Kraton D1320X, and hydrogenated aliphatic tackifying resin.

| | Formulation | |
| --- | --- | --- |
| | A | B |
| Kraton D1320X | 35.0% | – |
| Kraton D1112 | – | 35.0% |
| Regalrez 1078 | 25.0% | – |
| Regalrez 1126 | 25.0% | – |
| Wingtack 95 | – | 50.0% |
| White mineral oil | 15.0% | 15.0% |
| Irganox 1010 | 0.5% | 0.25% |
| Irgafos 168 | 0.5% | – |

Formulations A and B were applied at approximately 1.2 mils thickness (20 lbs./3000 sq. ft.) to the back of industrial sandpaper. Portions of the coated adhesive were left unradiated while other portions were subjected to electron beam radiation under a nitrogen atmosphere in amounts of 5 and 7.5 megarads. Various portions of the exposed and unexposed sandpaper were bonded to a circular (5 inch diameter) platen of an electrical rotating sanding apparatus wherein the platen is composed of hard-molded urethane foam with a highly plasticized PVC film facing. The bonded sandpaper discs were thereafter aged for 72 hours at 120°F to accelerate possible plasticizer migration. Table I, below, summarizes the observed results.

Table I

| | Radiation Dose | Bond Appearance After 72 Hours @ 120°F. |
| --- | --- | --- |
| Formulation A | 0 (none) | Very gummy |
| Formulation B | 0 (none) | Very gummy |
| Formulation A | 5 megarads | Clean, removable, no legs |
| Formulation B | 5 megarads | Gummy, soft |
| Formulation A | 7.5 megarads | Clean, no legs |
| Formulation B | 7.5 megarads | Clean, slight legs |

The above results show that superior, durable bonding on plasticized PVC is achieved with both irradiated formulations. However, less irradiation is required with the adhesive employing Kraton D1320X as contrasted with the adhesive employing Kraton D1112.

Example 2

Formulation A was coated on silicone release paper at a thickness of approximately 1.0 mils (16 lbs./3000 sq. ft.) and subsequently passed and exposed under an electron beam emitter in a nitrogen atmosphere to a radiation of 2.5 and 5.0 megarads. A portion of the coated silicone release paper was left unexposed. The exposed and unexposed samples were bonded with pressure to 50 lb. litho paper stock such as is commonly used for printing labels and the like. The laminates were cut in squares (2" x 2") to represent labels. Thereafter the release liner was removed and the squares were bonded to highly plasticized PVC film such as is used in vinyl covered notebooks or folders.

The bonded samples were placed in a 140°F. oven and examined at 24 and 72 hours for plasticizer

5

absorption and penetration into the paper label. Table II, below, summarizes the observed results.

### Table II

| | Plasticizer Penetration | |
|---|---|---|
| Radiation Exposure | 24 hours @ 140°F. | 72 hours @ 140°F. |
| 0 (none) | Moderate saturation into paper stock | Complete saturation into paper stock |
| 2.5 megarads | No penetration | No penetration |
| 5.0 megarads | No penetration | No penetration |

Example 3

In this example, samples of the printing label laminates of Example 2 were applied to a higher grade of vinyl which had been embossed and treated to have a leather-type finish of the grade used in the manufacture of luggage. The vinyl was plasticized with both polymeric and monomeric plasticizers. The samples were aged for one week at 140°F. with the results summarized in Table III.

### Table III

| Radiation Exposure | Plasticizer Penetration |
|---|---|
| 0 (none) | 50% saturation into paper stock; on label removal, adhesive remained on vinyl |
| 2.5 megarads | No penetration; removed cleanly |
| 5.0 megarads | No penetration; removed cleanly |

Example 4

The following two representative compositions illustrate the adhesive of the invention dissolved in solvent so that the substrate is coated with a solution of the adhesive and is particularly useful for manufacturers who do not have hot melt coating equipment available.

| | Formulation (parts) | |
|---|---|---|
| | C | D |
| Kraton 1320X | 30 | – |
| Kraton D1117 | – | 24 |
| Wingtack 95 | 54 | – |
| Regalrez 1126 | – | 30 |
| Escorez 5300 | – | 30 |
| Mineral Oil (Kaydol™) | 14 | – |
| Polybutene | – | 14 |
| Antioxidant | 2 | 2 |
| Toluene | 70 | 40 |
| n-Heptane | – | 20 |

The components are combined in a sealed vessel and agitated until completely dissolved and the adhesive is thereafter coated on a release liner substrate. The coated substrate is dried in a circulating air oven to remove the solvent before irradiation of the adhesive with electron beam.

Example 5

This example utilizes tackifying resins which are hydrogenated from 90-95% in formulating the pressure

sensitive adhesive.

|  | Parts |
| --- | --- |
| Kraton D1320X | 35.0 |
| Arkon P-90 | 25.0 |
| Arkon P-125 | 25.0 |
| Mineral Oil (Kaydol™) | 15.0 |
| Irganox 1010 | 0.5 |
| Irgafox 168 | 0.5 |

The adhesive was coated on a release paper substrate at about 1.2 mils thickness and exposed to electron beam radiation (about 3.5 megarads). The cured adhesive was evaluated on a vinyl substrate containing a migratory plasticizer with results comparable to those observed with the Formulation A adhesive of Example 1.

Example 6

This example illustrates an adhesive composition utilizing a hydrogenated rosin or rosin ester tackifying resin in addition to the aliphatic hydrocarbon tackifier. This type of formulation is especially useful for articles for bonding to skin as is found in skin bandages or ostomy devices, and the like.

|  | Formulation | |
| --- | --- | --- |
|  | A | B |
| Kraton D1320X | 35.0% | 35.0% |
| Arkon P90 | 17.5% | 17.5% |
| Arkon P125 | 25.0% | 17.5% |
| Arakawa KR-610* | 7.5% | -- |
| Arakawa KE-311** | -- | 15.0% |
| Mineral Oil (Kaydol™) | 15.0% | 15.0% |
| Antioxidant | 1.0% | 1.0% |

\* Arakawa KR-610 is a hydrogenated rosin.
\*\* Arakawa KE-311 is a glycerol ester of a hydrogenated rosin.

Each adhesive formulation was coated (approx. 1.0 mils) on pink colored PVC film containing a migratory plasticizer which is used for manufacturing skin bandages. The coated adhesives were exposed to 5.0 megarads of electron beam radiation. Both adhesives exhibited good adhesion to skin and were observed to be unaffected by the plasticizer in the polyvinyl chloride film.

Now that the preferred embodiments of the present invention have been described in detail, various modifications and improvements thereon will become readily apparent to those skilled in the art. Accordingly, the spirit and scope of the present invention is to be limited only by the appended claims, and not by the foregoing disclosure.

**Claims**

1. An article comprising a plasticized polyvinyl chloride substrate coated with a plasticizer resistant adhesive composition having pressure sensitive properties comprising:
   a) 20 to 50% by weight of a styrene-isoprene-styrene block copolymer,
   b) 40 to 60% by weight of aliphatic hydrocarbon tackifier,
   c) 5-25% by weight of a plasticizing oil,
   d) 0-25% by weight of hydrogenated rosin or rosin ester,
   e) minor amount(s) of at least one antioxidant,
   said adhesive having been exposed after coating to electron beam radiation of 2-12 megarads or ultraviolet light sufficient to crosslink said adhesive.

2. The coated substrate of Claim 1, wherein the adhesive plasticizing oil is mineral oil and the styrene-isoprene-styrene block copolymer contains about 10% styrene and 90% isoprene.

3. The coated substrate of Claim 2, wherein the aliphatic hydrocarbon tackifier is from 80-100% hydrogenated, and the composition contains from 5 to 15% by weight of a hydrogenated rosin or rosin ester.

4. The coated substrate of Claim 1, wherein the adhesive plasticizing oil is present in an amount of 10-20% by weight and the antioxidant is present in an amount of from 0.5 to 2.0% by weight.

5. An article intended for application to a plasticized polyvinyl chloride surface comprising a paper, plastic film, fabric, metallic foil or composite substrate coated with a plasticizer resistant adhesive composition having pressure sensitive properties comprising:
    a) 20 to 50% by weight of a styrene-isoprene-styrene block copolymer,
    b) 40 to 60% by weight of aliphatic hydrocarbon tackifier,
    c) 5-25% by weight of a plasticizing oil,
    d) 0-25% by weight of hydrogenated rosin or rosin ester,
    e) minor amount(s) of at least one antioxidant,
said adhesive having been exposed after coating to electron beam radiation of 2-12 megarads or ultraviolet light sufficient to crosslink said adhesive.

6. The article of claim 5, wherein the adhesive plasticizing oil is mineral oil and the styrene-isoprene-styrene block copolymer contains about 10% styrene and 90% isoprene.

7. The article of Claim 6, wherein the aliphatic hydrocarbon tackifier is from 80-100% hydrogenated, and the composition contains from 5 to 15% by weight of a hydrogenated rosin or rosin ester.

8. The article of Claim 5, wherein the adhesive plasticizing oil is present in an amount of 10-20% by weight and the antioxidant is present in an amount of from 0.5 to 2.0% by weight.

9. The article of Claim 5, wherein the composite substrate is an abrasive coated paper or fabric.